# EUROPEAN PATENT SPECIFICATION

(11) **EP 4 703 095 B1**
(45) Date of publication and mention of the grant of the patent: **04.11.2026**
(21) Application number: 25197976.1
(22) Date of filing: 25.08.2025
(51) Int. Cl.: B25J 9/16, B25J 13/08

(54) **ROBOT SYSTEM**
ROBOTERSYSTEM
SYSTÈME DE ROBOT

(30) Priority: 02.09.2024 JP 2024150457
(43) Date of publication of application: 04.03.2026
(73) Proprietor: Nachi-Fujikoshi Corp., Tokyo 105-0021 (JP)
(72) Inventor: NIIHARA, Takuma, Toyama, 930-8511 (JP)
(74) Representative: Plougmann Vingtoft a/s

(56) References cited:
- WO-A1-2024/013692
- US-A1- 2015 290 796
- US-A1- 2016 207 197
- US-A1- 2016 243 705
- ESCOBEDO CALEB ET AL: "Contact Anticipation for Physical Human-Robot Interaction with Robotic Manipulators using Onboard Proximity Sensors", 2021 IEEE/RSJ INTERNATIONAL CONFERENCE ON INTELLIGENT ROBOTS AND SYSTEMS (IROS), IEEE, 27 September 2021 (2021-09-27), pages 7255 - 7262, XP034050867, DOI: 10.1109/IROS51168.2021.9636130

## Description

### TECHNICAL FILED

The present invention relates to a robot system formed with a robot and a control apparatus of the robot.

### Background Art

Robot systems typically include a robot control apparatus and a robot equipped with movable members such as articulable arms and a manipulator attached to the arms. Some robot systems are designed with a function of detecting a collision between the movable members and an object, such as a human or a structure, and upon a detection of collision, the systems stop the operation of the robot. In particular, the emergency stop function performed upon a detection of collision is indispensable in the robot systems in the field of that employs collaborative robots. When the operation of a robot is halted resulting from a detection of collision with a worker, there may be cases where the worker needs to push the movable members away to free himself or herself.

Japanese Patent Application Laid-Open No. 2024-6697 discloses that in the situation where the operation of a robot is halted upon a detection of collision of a manipulator (a movable member) with a worker, if the worker, for example, pushes the manipulator away to free himself or herself the robot control apparatus calculates an external force imposed on the manipulator by the worker and moves the manipulator, based on the calculated external force, to assist the worker's act of pushing away the manipulator.

US 2015/290796 A1 discloses a robot controller for easily moving a desired axis of a robot by applying a force to a front end of the robot, and a robot system including the robot controller. The robot controller has: a force measuring part which measures a force applied to the front end; an operation force calculating part which calculates an operation force for moving each axis based on the measured force; an operation commanding part which outputs a command for moving the robot; and an operation axis specifying part which specifies an operation axis to be moved in response to the force, and determines a direction of movement of the operation axis as a function of a direction of the force. When two or more operation axes are specified, the operation axis specifying part determines as to whether or not each operation axis can be moved, depending on a status of the movement operation. Non-patent literature also discusses techniques for facilitating safe physical human-robot interaction. For example, ESCOBEDO CALEB ET AL: "Contact Anticipation for Physical Human-Robot Interaction with Robotic Manipulators using Onboard Proximity Sensors", 2021 IEEE/RSJ INTERNATIONAL CONFERENCE ON INTELLIGENT ROBOTS AND SYSTEMS (IROS), IEEE, 27 September 2021 (2021-09-27), pages 7255-7262, XP034050867, DOI: 10.1109/IROS51168.2021.9636130 [retrieved on 2021-12-03].

US 2016/243705 A1 discloses human cooperation robot system includes: an external force detecting unit that detects an external force acting on a robot; a retreat operation commanding unit that commands a retreat operation for causing the robot to be moved in a direction such that the external force is decreased when the external force detected by the external force detecting unit is greater than a first threshold value; and an external force variation monitoring unit that stops the retreat operation when a variation width of the external force at a predetermined time after the retreat operation is commanded by the retreat operation commanding unit is smaller than a second threshold value.
US 2016/207197 A1 discloses a contact judging part which judges if the robot has contacted an object based on external force which is detected by the sensor, a stop command part which makes the robot stop when it is judged that the robot has contacted the object, a continuous contact judging part which judges if the robot continues to contact the object after making the robot stop, and a retraction command part which makes the robot retract in a direction away from the object when it is judged that the robot continues to contact the object.
WO 2024/013692 A1 discloses dynamic stability of a robot manipulator. A robot manipulator comprises: a base; an arm connected to the base via at least a shoulder joint; and a control system comprising a force selector, wherein: the control system is configured to: receive target trajectory instructions defining a target trajectory of a distal end of the arm; generate, based on the received target trajectory instructions, instructions defining target motion of the base; and determine an effective force which, when applied to the base, could cause the base to execute the target motion according to the instructions; in response to one or more applied forces on the robot manipulator, the control system is further configured to determine one or more of: a virtual ZMP force which, when applied to the base, would either counteract an observed motion of a ZMP of the robot manipulator, or act to move the ZMP back to within a predetermined support region; and an external force applied to the base; the force selector is configured to receive data defining the effective force and at least one of the virtual ZMP force and the external force applied to the base, and to determine a target force based on the data; and the control system is configured to generate instructions which, when executed by the base, cause the base to execute motion in response to the target force.

### Summary

### Technical Problem

When a collision is detected, the operation of the movable members is placed on halt. While the operation of the movable members is on halt, if the robot receives an external force from a worker or someone near the robot, the movable members are moved in such a way to follow the imposed external force, while not to interfere with the worker's motion and move. However, the external force may sometimes be detected to have a torque value different from the actual torque vale because of causes including erroneous initial settings of the robot and erroneous readings by the torque sensors for detecting external forces acting on the movable members. If an erroneous detection of the external force occurs, the movable members may continue their movement even after the external force imposed by the worker to move them away ceases. The inventor has recognized the need to address these unexpected movements of the movable members that may be caused by erroneous initial settings of the robot, malfunctions of the torque sensors and the like.

### Solution to Problem

To address the above problem, the present invention provides a robot system that can move the movable members, when an external force is imposed on the robot while the robot is on halt, in such a way to follow the imposed external force, while reducing occasions that the movable members take an unintended action.

The robot system according to the present invention comprises a robot including movable members, and a control apparatus programmed to control the operation of the robot. The control apparatus is programmed to implement an emergency stop controller configured to stop the operation of the movable members based on the external force imposed on the movable members during their operation. The control apparatus is further programmed to implement a direction calculator configured to determine a moving direction of the movement of the movable members caused by the external force imposed on the movable members, after the emergency stop controller stops the operation of the movable members. The control apparatus is further programmed to implement the direction calculator is configured to determine the moving direction to be a direction selected to decrease the external force from among directions in which the movable members can possibly be moved. The control apparatus is further programmed to implement a speed calculator configured to determine a moving speed of the movable members in accordance with a function that includes a variable coefficient, which decreases over time starting from when the emergency stop controller stops the operation of the movable members and a magnitude of the external force imposed after the emergency stop controller stops the operation of the movable members. The control apparatus is further programmed to implement a movement controller configured to move the movable members in the determined moving direction at the determined moving speed.

In another aspect of the present invention, the speed calculator is configured to operate in a first mode or in a second mode. The first mode is executable by the speed calculator to determine the moving speed in accordance with the function including the variable coefficient and the magnitude of the external force imposed on the movable members after the emergency stop controller places the movable members on halt, and the second mode is executed by the speed calculator to determine the moving speed based solely on the magnitude of the external force imposed on the movable members without regard to the variable coefficient.
The speed calculator is further configured to end its operation in the first mode when conditions are met that a predetermined time has elapsed since the emergency stop controller places the movable members on halt, and the external force imposed on the movable members has become less than a threshold after the emergency stop controller places the movable members on halt and thereafter to start operating in the second mode.

In another aspect of the present invention, the predetermined time is a length of time measured from when the emergency stop controller places the movable members on halt through when the variable coefficient falls below a predetermined value.

Further in another aspect of the present invention, the robot comprises a torque sensor configured to detect a torque acting on the movable members. The control apparatus is further programmed to implement an external force calculator configured to calculate a presumptive torque presumed to be acting on the movable members. The external force calculator is configured to calculate the presumptive torque, using a point mass model that represents the shape, the position, the mass, and the center of gravity of the robot and to estimate the external force imposed on the movable members. The estimate of the external force is defined by a difference between the torque detected by the torque sensor and the presumptive torque calculated by the external force calculator.

### Advantageous Effect of Invention

The robot system according to the present invention responds to an external force if imposed on the robot while being placed on halt, to move the movable members in the way for the movable members to follow the imposed external force, while reducing occasions that the movable members act in an unintended way.

### Brief Description of the Drawings

Fig. 1 is a diagram showing an overall configuration of a robot system according to an embodiment of the present invention;
Fig. 2 is a diagram showing a functional configuration of the control apparatus shown in Fig. 1;
Fig. 3A is a diagram showing the robot with an external force (τ) imposed on the robot shown in Fig. 1;
Fig. 3B is a diagram showing the robot moving at an angular velocity (ω1) as a result of the external force imposed on the robot shown in Fig. 1;
Fig. 3C is a diagram showing the robot with the external force (τ) imposed obliquely on the robot shown in Fig. 1;
Fig. 3D is a diagram showing the robot moving at an angular velocity (ω2) as a result of the external force imposed obliquely on the robot shown in Fig. 1; and
Fig. 4 is a flowchart showing an exemplary processing procedure of the robot system shown in Fig. 1.

### Detailed Description of Embodiments

Hereinafter, embodiments of the present invention (hereinafter, referred to as the "present embodiment(s)") will be described with reference to the accompanying drawings. In order to facilitate understanding of the present embodiment, the same components and the same steps in each drawing will be denoted with the same reference numerals where possible, and duplicate descriptions will be omitted where appropriate.

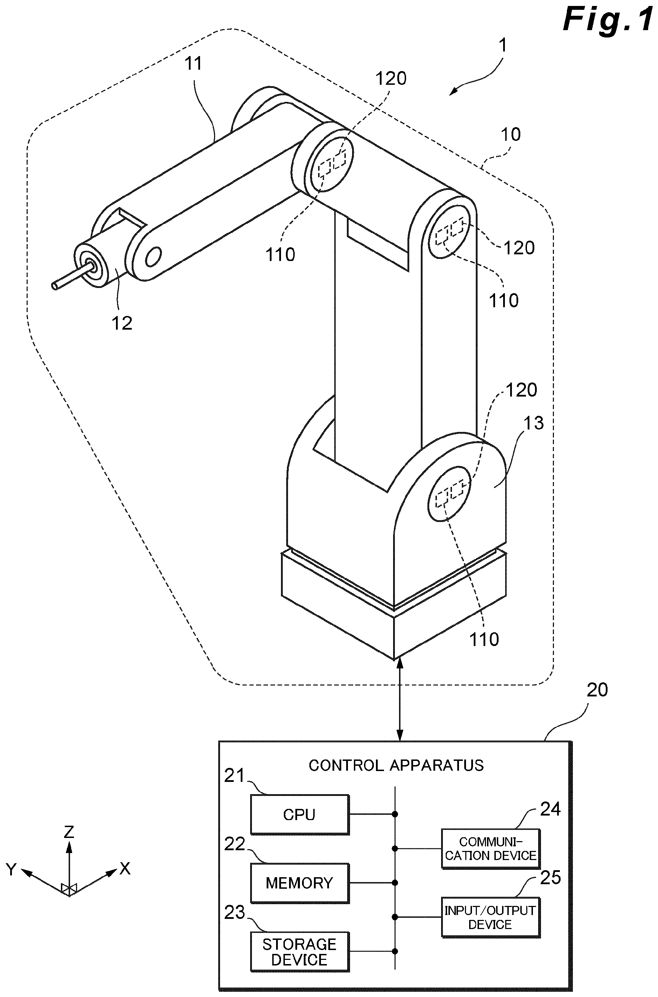

Fig. 1 is a diagram showing an overall configuration of a robot system 1 according to the present embodiment. For example, the robot system 1 is formed in principle with a robot 10 and a control apparatus 20. In Fig. 1, the upward direction perpendicular to the installation surface of the robot 10 is defined to be a Z-axis direction. In Fig. 1, a direction perpendicular to the Z-axis direction is defined to be an X-axis direction. In Fig. 1, the direction perpendicular to the Z- and X-axes direction is defined to be a Y-axis direction.

The robot 10 can move in a space delineated by a predetermined distance from the robot 10. The robot 10 is formed with an articulable arm, a machine tool, and a tester, for example. The robot 10 according to the present embodiment is contemplated to have an articulable arm composed with movable members. As shown in Fig. 1, the robot 10 is formed in principle with the movable members 11, a wrist 12, and a base 13, for example.

The movable members 11 collectively form an articulable, movable arm, which is formed in main part with a plurality of arm links and a plurality of driving units, for example. A torque sensor 110 for detecting a torque acting on the respective movable members 11 and an encoder 120 for detecting a rotation angle of the respective movable members are incorporated in respective joints of the movable members 11. The movable members 11 are connected in communication with a control apparatus 20.

The wrist 12 is connected to the distal end of the movable members 11 and performs various types of work on workpieces (not shown) with different kinds of tools detachably adopted to the wrist 12. Examples of the types of performable work include X-ray irradiation, gripping, transportation, rotation, assembling to another workpiece, injection or application of substances, polishing, screwing, and heating.

The base 13 is installed in placement on an installation surface (not shown) of the robot 10.

The control apparatus 20 is an information processing apparatus that controls the operation of the robot 10. The control apparatus 20 is formed in principle with a storage device 23 for storing various programs and various processing information needed for a central processing unit (CPU) 21 to execute tasks and storing information resultant from the execution of the tasks. The control apparatus 20 is also formed in principle with the CPU 21 that implements a collection of functional modules by executing certain programs stored in a memory 22, the storage device 23, or the like. The control apparatus 20 is further formed in principle with the memory 22 for temporarily storing the programs and data needed for the CPU 21 to execute the programs, and a communication device 24 for communicating with external apparatuses. The control apparatus 20 is further formed in principle with an input/output device 25 that receives an input from an operator of the control apparatus 20 to operate the control apparatus 20 and displays for the operator information provided by the control apparatus 20. The control apparatus 20 may be formed with a single information processing apparatus or a plurality of information processing apparatuses.

The control apparatus 20 receives information encapsulating detection results transmitted from various types of detection devices, including, for example, the torque sensors 110 and the encoders 120 provided in the robot 10. The control apparatus 20 implements functional constructs to operate the robot 10, based on the detection results, and controls the operation of the robot 10 by transmitting control commands to the robot 10. The control apparatus 20 notifies information received from the robot 10, calculated values, and the like to administrators, users, or the like of the robot system 1, using screen display, audio output, etc. The overall configuration of the robot system 1 has been described above.

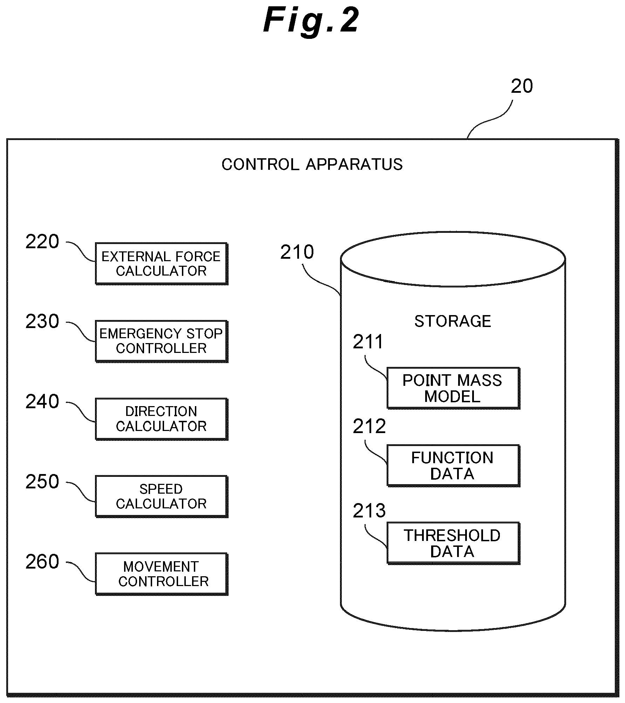

Next, a functional configuration of the control apparatus 20 will be described with reference to Fig. 2. Fig. 2 is a diagram showing the functional configuration of the control apparatus 20 shown in Fig. 1. As shown in Fig. 2, the control apparatus 20 is exemplarily formed in principle with a storage 210, an external force calculator 220, an emergency stop controller 230, a direction calculator 240, a speed calculator 250, and a movement controller 260. The functional components of the control apparatus 20, other than the storage 210, are implemented by the CPU 21 executing the programs stored in the storage device 23 or the like.

The storage 210 is a functional component storing a point mass model 211, function data 212, and threshold data 213.

The point mass model 211 comprises three-dimensional model data simulating the robot 10. The point mass model 211 represents the shape, the position, the mass, and the center of gravity of each of the movable members 11 of the robot 10, and includes information on connections among the movable members 11.

The function data 212 comprises data including information on a mathematical function that is executed, when the robot 10 being on halt receives an external force, to calculate a moving speed at which the movable members 11 are moving. For example, the function data 212 includes a narrative of a function expressed by Equation ω = α(t)τ [Eq. 1]. Value (ω) represents an angular velocity of the movable members 11 of the robot 10. Value (t) represents an elapsed time measured since the operation of movable members 11 of the robot 10 is placed on halt. Value (τ) represents a magnitude of external force received by the movable members 11 of the robot 10. Coefficient (α) varies depending on value (t) and decreases as value (t) increases. Specifically, the value of coefficient (α) decreases in proportion to an increase of value (t). The function data 212 also includes a narrative of a function expressed by Equation ω = βτ [Eq. 2], for example. Coefficient (β) is a predetermined fixed value.

The threshold data 213 comprises data that includes threshold values referenced by the control apparatus 20 when making determinations on the operation of the movable members 11 of the robot 10. For example, the threshold data 213 includes a threshold referenced to determine whether to stop the operation of the robot 10 when an external force is received by the robot 10. The threshold data 213 also includes another threshold referenced to switch the operation mode of the robot 10 from a first mode to a second mode, which are discussed in detail below.

The external force calculator 220 calculates an estimate of external force assumed to be acting on the movable members 11. The external force calculator 220 first determines estimated torques according to the Newton-Euler method, using the detection results of the encoders 120 in the movable members 11 of the robot 10 and the point mass model 211 stored in the storage 210. The external force calculator 220 then calculates an estimate of external force assumed to be acting on the movable members 11, which is defined by the difference between the actual torques derived from the detection results of the torque sensors 110 in the movable members 11 of the robot 10 and the estimated torques. Further details of the calculation of the estimate of external force by the external force calculator 220 will be discussed below.

The emergency stop controller 230 controls the operation of the robot 10 to stop the movable members 11 from operating, based on the estimate of external force calculated by the external force calculator 220. Specifically, during the operation of the movable members 11, the emergency stop controller 230 references a threshold in the threshold data 213 stored in the storage 210, which is related to determination on whether to stop the operation of the robot 10 and determines whether a magnitude of the estimate of external force calculated by the external force calculator 220 is greater than or equal to the threshold. If the estimate of external force calculated by the external force calculator 220 is determined to be greater than or equal to the threshold, the emergency stop controller 230 stops the operation of the robot 10. If the estimate of external force is determined to be less than the threshold, the emergency stop controller 230 allows continuous operation of the robot 10. The emergency stop controller 230 transmits to the robot 10 a control command to halt the operation of the movable members 11.

The direction calculator 240 determines a moving direction of the movable members 11, based on the estimate of external force assumed to be received by the movable members 11, after the operation of the movable members 11 is placed on halt by the emergency stop controller 230. Specifically, the direction calculator 240, after the movable members 11 are placed on halt, determines a moving direction of the movable members 11 to be a direction selected, so as to decrease the estimate of external force calculated by the external force calculator, from among all directions in which the movable members 11 can possibly move.

The speed calculator 250 starts with speed calculation in the first mode after the operation of the movable members 11 is placed on halt by the emergency stop controller 230. The first mode is executed by the speed calculator 250 to recursively determine a moving speed of the movable members 11, based on the coefficient, which decreases over time starting from when the operation of the movable members 11 is halted, and based further on the magnitude of the estimate of external force calculated by the external force calculator 220. *See supra* Eq. 1. When two conditions are met that a predetermined time has elapsed in the first mode since the operation of the movable members 11 is halted, and the estimate of external force calculated by the external force calculator 220 becomes less than a predetermined threshold value, the speed calculator 250 ends its speed calculation in the first mode and starts speed calculation in the second mode. The predetermined time is measured from when the operation of the movable members 11 is halted through when the coefficient falls below a predetermined threshold value. The second mode is executed by the speed calculator 250 to determine the moving speed of the movable members 11, based solely on the magnitude of the estimate of external force without regard to the coefficient used in the first mode. *See supra* Eq. 2.

The movement controller 260 controls the operation of the robot 10, after the operation of the movable members 11 is halted by the emergency stop controller 230, to move the movable members 11 in the moving direction determined by the direction calculator 240 at the moving speed determined by the speed calculator 250. The movement controller 260 transmits control commands to the robot 10 to execute movement control of the movable members 11 to assist the worker moving the movable members 11.

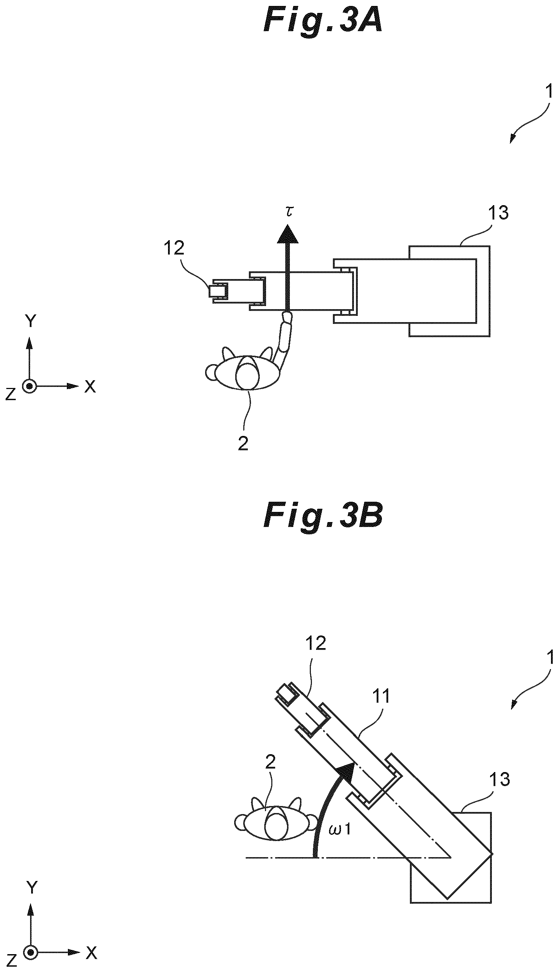

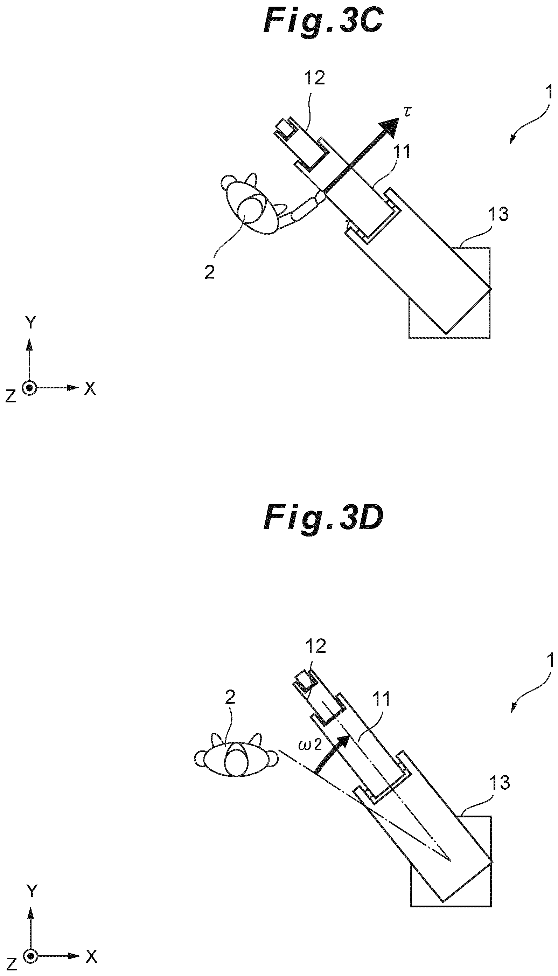

The operation of the robot 10 in the first mode will be further described with reference to Figs. 3A to 3D. Figs. 3A to 3D are diagrams showing the operation of the robot 10 when an external force is received by the robot 10 shown in Fig. 1. Fig. 3A shows the robot 10 at a point in time when time t1 has elapsed since starting the speed calculation in the first mode after the operation of the movable members 11 is halted by the emergency stop controller 230. Fig. 3C shows the robot 10 at a point in time when time t2 has elapsed since the robot 10 started the speed calculation in the first mode.

In Fig. 3A, the robot 10 receives an external force (τ) from a nearby worker in the Y-axis direction. Upon reception of the external force (τ) from the worker 2, the external force calculator 220 calculates an estimate of the external force (τ). Based on the calculated estimate of the external force, the direction calculator 240 determines a moving direction to be adopted by the movable members 11. In Fig. 3A, the direction calculator 240 determines a direction that directs the movable members 11 to collectively rotate clockwise about the base 13 as shown in the drawing. The speed calculator 250 also determines a moving speed to be adopted by the movable members 11. Specifically, the speed calculator 250 calculates a moving speed (ω1) by plugging the estimate of the external force (τ) and the time (t1) into Eq. 1.

Referring to Fig. 3B, the robot 10 is operated by the movement controller 260 to move the movable members 11 in the moving direction determined by the direction calculator 240 at the moving speed (ω1) determined by the speed calculator 250.

Referring to Fig. 3C, the robot 10 receives an external force from a nearby worker in a direction angled by 45° from the positive Y-axis direction toward the positive X-axis direction. Receiving the external force (τ) from the worker 2, the external force calculator 220 calculates an estimate of the external force. Based on the calculated estimate of the external force, the direction calculator 240 determines a moving direction to be adopted by the movable members 11. Like in Fig. 3C, the direction calculator 240 determines a direction that directs the movable members 11 to collectively rotate clockwise about the base 13 as shown in the drawing. The speed calculator 250 determines a moving speed to be adopted by the movable members 11. While determining the moving speed, the speed calculator 250 calculates a moving speed (ω2) by plugging the estimate of the external force (τ) and the time (t2) into Eq. 1.

Referring to Fig. 3D, the robot 10 is operated by the movement controller 260 to move the movable members 11 in the moving direction determined by the direction calculator 240 at the moving speed (ω2) determined by the speed calculator 250. In Fig. 3D, the moving speed (ω2) is shown to have a value smaller than the moving speed (ω1) because more time has elapsed at calculation of the moving speed (ω2) than at calculation of the moving speed (ω1) .

Thus far, the operation of the robot system 1 in the first mode has been described. The operation of the robot system 1 performed in the second mode is similar to the operation performed in the first mode, except that the moving speed is fixed to the value calculated at the exact moment when the operation of the movable members 11 is placed on halt. A description thereof is thus omitted.

### <Processing Procedure>

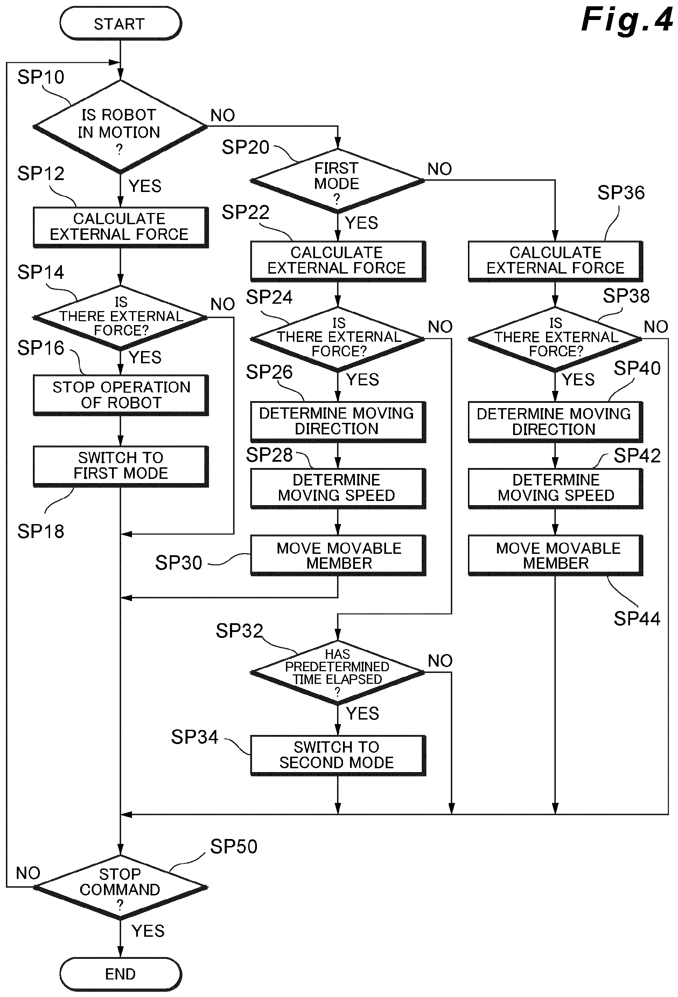

The functional configuration of the control apparatus 20 has been described above. Next, a processing procedure, according to the present embodiment, of the robot system 1 will be described in detail below. Fig. 4 is a flowchart showing an exemplary processing procedure of the robot system 1.

(Step SP10) The emergency stop controller 230 of the robot system 1 determines whether the movable members 11 of the robot 10 are in motion. If the movable members 11 are determined in motion, the processing procedure proceeds to step SP12. On the other hand, if the movable members 11 are determined not moving, the processing procedure proceeds to step SP20.

(Step SP12) The external force calculator 220 of the robot system 1 calculates an estimate (first estimate) of external force received by the movable members 11 of the robot 10. Specifically, the external force calculator 220 of the robot system 1 receives detection results of the encoders 120 indicating a rotation angle of the respective joints of the movable members 11 from the robot 10. Next, the external force calculator 220 of the robot system 1 calculates an estimated torque exerted at the respective joints of the movable members 11 according to the Newton-Euler method, using the received detection results of the encoders 120, past detection results of the encoders 120, and the point mass model 211 in the storage 210. While calculating the estimated torques, the external force calculator 220 of the robot system 1 calculates an angle, an angular velocity, and an angular acceleration of each joint of the movable members 11 using the current detection results of the encoders 120, the detection results of the encoders 120 obtained in the past, and the point mass model 211. The external force calculator 220 of the robot system 1 plugs the calculated angle, angular velocity, and angular acceleration of each joint into the point mass model 211 and solves the motion equation to derive the estimated torque. After the estimated torque at the respective joints is calculated by the external force calculator 220, the robot system 1 obtains the detection results from the torque sensors 110 of the robot 10 that indicate an actual torques exerted on the movable members 11. The external force calculator 220 of the robot system 1 then calculates an estimate of the external force acting on the movable members 11, which is the difference between the values indicated by the presumptive torques calculated using the Newton-Euler method and the value indicated by the torque sensors 110. The processing procedure then proceeds to step SP14.

(Step SP14) The emergency stop controller 230 of the robot system 1 determines whether the magnitude of the first estimate of external force calculated by the external force calculator 220 is greater than or equal to a first threshold selected from those in the threshold data 213 stored in the storage 210 to determine whether to stop the operation of the robot 10. If the determination is affirmative, the processing procedure proceeds to step SP16. If the determination is otherwise, the processing procedure proceeds to step SP50.

(Step SP16) The emergency stop controller 230 of the robot system 1 controls the operation of the robot 10 to halt the operation of the movable members 11 of the robot 10. The processing procedure then proceeds to step SP18.

(Step SP18) The speed calculator 250 of the robot system 1 switches the operation mode to the first mode. The processing procedure then proceeds to step SP50.

(Step SP20) The speed calculator 250 of the robot system 1 determines whether the operation mode is the first mode. Remember that the processing procedure proceeds to step SP20 because the movable members 11 are determined not moving in step SP10. If the determination is affirmative, the processing procedure proceeds to step SP22. Otherwise, the processing procedure proceeds to step SP36.

(Step SP22) The external force calculator 220 of the robot system 1 calculates an estimate (second estimate) of the external force acting on the movable members 11 of the robot 10. Since the processing procedure for calculating the second estimate of the external force by the external force calculator 220 is the same as discussed in step SP12, its description will not be repeated here. The processing procedure then proceeds to step SP24.

(Step SP24) The emergency stop controller 230 of the robot system 1 determines whether the magnitude of the second estimate of the external force calculated by the external force calculator 220 is greater than or equal to a second threshold selected from those in the threshold data 213 stored in the storage 210. If the determination is affirmative, the processing procedure proceeds to step SP26. Otherwise, the processing procedure proceeds to step SP32.

(Step SP26) The direction calculator 240 of the robot system 1 determines a moving direction to be adopted by the movable members 11 of the robot 10. Specifically, the direction calculator 240 of the robot system 1 determines the moving direction of the movable members 11 to be a direction which is selected, so as to decrease the second estimate of the external force calculated by the external force calculator 220, from among all directions in which the movable members 11 could possibly move. The processing procedure then proceeds to step SP28.

(Step SP28) The speed calculator 250 of the robot system 1 determines a moving speed of the movable members 11 of the robot 10. Specifically, the speed calculator 250 of the robot system 1 searches the function data 212 stored in the storage 210 and selects a coefficient having a function of decreasing over time starting from when the operation of the movable members 11 is placed on halt. The speed calculator 250 of the robot system 1 calculates the value of the coefficient by plugging, into the function, the time elapsed since when the movable members 11 are placed on halt. The speed calculator 250 of the robot system 1 determines the moving speed of the movable members 11 by multiplying the coefficient calculated by the speed calculator 250 with the magnitude of the estimate of external force calculated by the external force calculator 220. The processing procedure then proceeds to step SP30.

(Step SP30) The movement controller 260 of the robot system 1 moves the movable members 11 of the robot 10 in the moving direction determined by the direction calculator 240 in step SP26 at the moving speed determined by the speed calculator 250 in step SP28. The processing procedure then proceeds to step SP50.

(Step SP32) The speed calculator 250 of the robot system 1 determines whether a predetermined time has elapsed since the operation of the movable members 11 of the robot 10 is halted. If the determination is affirmative, the processing procedure proceeds to step SP34. Otherwise, the processing procedure proceeds to step SP50.

(Step SP34) The speed calculator 250 of the robot system 1 switches the operation mode to the second mode. The processing procedure then proceeds to step SP50.

(Step SP36) The external force calculator 220 of the robot system 1 calculates an estimate (third estimate) of the external force acting on the movable members 11 of the robot 10. Since the processing procedure for calculating the third estimate of the external force by the external force calculator 220 is the same as discussed in step SP12, its description thereof will be repeated here. The processing procedure then proceeds to step SP38.

(Step SP38) The emergency stop controller 230 of the robot system 1 determines whether the magnitude of the third estimate of external force calculated by the external force calculator 220 is greater than or equal to a third threshold selected from those in the threshold data 213 stored in the storage 210. If the determination is affirmative, the processing procedure proceeds to step SP40. Otherwise, the processing procedure proceeds to step SP50.

(Step SP40) The direction calculator 240 of the robot system 1 determines a moving direction to be adopted by the movable members 11 of the robot 10. Since the details of the determination of the moving direction by the direction calculator 240 are the same as discussed in step SP26, the description thereof will not be repeated here. The processing procedure then proceeds to step SP42.

(Step SP42) The speed calculator 250 of the robot system 1 determines a moving speed to be adopted by the movable members 11 of the robot 10. Specifically, the speed calculator 250 of the robot system 1 determines the moving speed of the movable members 11 by multiplying the fixed value coefficient (β) with the magnitude of the third estimate of external force (τ) calculated by the external force calculator 220. The processing procedure then proceeds to step SP44.

(Step SP44) The movement controller 260 of the robot system 1 moves the movable members 11 of the robot 10 in the moving direction determined by the direction calculator 240 in step SP40 at the moving speed determined by the speed calculator 250 in step SP42. The processing procedure then proceeds to step SP50.

(Step SP50) The emergency stop controller 230 of the robot system 1 determines whether a command to stop the robot system 1 is received through means such as input by the operator of the robot system 1 or a control signal transmitted from an external apparatus (not shown). If the determination is negative, the processing procedure proceeds to step SP10. Otherwise, the processing procedure shown in Fig. 4 ends.

### <Effects>

As described above, in the present embodiment, the robot system 1 determines the moving speed to be adopted by the movable members 11, based on the variable coefficient that decreases over time starting from when the operation is stopped and based further on the magnitude of the estimate of the external force imposed after the operation of the movable members 11 is placed on halt. As such, when external force is imposed on the robot 10 while placed on halt, the robot system 1 can move the movable members 11 to follow the imposed external force, while reducing occasions that the movable members 11 act in an unintended way.

In the present embodiment, the speed calculator 250 determines whether a predetermined time has elapsed in the first mode since the operation of the robot is placed on halt, and whether the estimate of the external force calculated by the external calculator 220 is less than the threshold. If the determination is both affirmative, the speed calculator 250 ends the operation in the first mode and starts the operation in the second mode, where the moving speed is determined based solely on the magnitude of the estimate of the external force without regard to the variable coefficient. That is, when a certain time has elapsed since the operation started in the first mode, the robot system 1 can move the movable members 11 based on the imposed external force, while reducing occasions that the movable members 11 act in an unintended way without excessively regulating the movements thereof.

In the present embodiment, the predetermined time is the length of time measured from when the operation is placed on halt through when the variable coefficient that decreases over time falls below the threshold. The robot system 1 can thus switch between the first mode and second mode depending on how sensitive the movable members 11 are to the external force.

In the present embodiment, the robot 10 includes the torque sensors 110 that detect torques acting on the movable members 11. The robot system 1 further includes the external force calculator 220, which calculates an estimated torques assumed to be acting on the movable members 11, based on the point mass model representing the shape, the position, the mass, and the center of gravity of the robot 10, and calculates an estimate of the external force which is defined by the difference between the actual torques detected by the torque sensors 110 and the estimated torques. When an external force is imposed on the robot 10 while placed on halt, the robot system 1 can thus move the movable members 11 with a high level of accuracy, based on the estimate of the imposed external force, while reducing occasions that the movable members 11 act in an unintended way.

The model used in the present embodiment is stored in the point mass model 211. The external force calculator 220 calculates an estimate of the external force in accordance with the Newton-Euler method. When an external force is imposed on the robot 10 while placed on halt, the robot system 1 can thus move the movable members 11, based on the imposed external force in a way achieving a reduction of the calculation load due to an adoption of the simple calculation method, while reducing occasions that the movable members 11 act in an unintended way.

In the present embodiment, the direction calculator 240 determines a direction selected, so as to decrease the imposed external force, from among all directions in which the movable members can possibly move. When an external force is imposed on the robot 10 while placed on halt, the robot system 1 can thus move the movable members 11 in the determined direction to decrease the imposed external force while reducing occasions that the movable members 11 act in an unintended way.

### <Modifications>

The robot system according to the present invention is not limited to the foregoing embodiments. Modifications achievable by those skilled in the art through appropriate design changes to the foregoing embodiment are also included in the scope of the present invention as long as the modifications have the features of the present invention. Moreover, the components of the foregoing embodiments and the components in the modifications described below can be combined as far as technically feasible. Such combinations are also included in the scope of the present invention as long as the combinations have the features of the present invention.

For example, in the present embodiment, the coefficient (α), which the speed calculator 250 uses to calculate the moving speed, decreases in proportion to an increase of the value (t). However, the present invention is not limited thereto. The coefficient (α) may be a coefficient of any function as long as the function causes the value of the coefficient to decrease as the value (t) increases. For example, the value of the coefficient (α) may decrease in an inversely proportional manner. For example, the function may have the coefficient (α), as a variable, that may decrease exponentially with an increase of the value (t). For example, the function may have the coefficient (α), as a variable, that may decrease logarithmically with an increase of the value (t). With such modified configurations being implemented, the robot system 1 can use an appropriate coefficient (α) depending on factors such as the environment where the robot 10 is installed and the condition where the robot 10 is used. The robot system 1 can thus move the movable members 11 under conditions suitable for the operation of the robot 10, based on the imposed external force, while reducing occasions that the movable members 11 act in an unintended way.

In the present embodiment, the robot system 1 calculates the estimated torques in accordance with the Newton-Euler method, using the detection results from the torque sensors 110 and the encoders 120 of the movable members 11 and further using the point mass model 211. However, the present invention is not limited thereto. For example, the robot system 1 may capture images of the robot 10 using an imaging apparatus such as a camera installed separately from the robot 10 and calculate the estimated torques from changes of the captured images over time. With such a modified configuration implemented, the robot system 1, even without using the Newton-Euler method, can move the movable members 11, based on the imposed external force, while reducing occasions that the movable members 11 of the robot 10 act in an unintended way.

In the present embodiment, the robot system 1 switches the operation mode to the second mode on condition that the operation mode of the robot 10 is the first mode, a predetermined time has elapsed, and an estimate of the external force is less than the threshold. However, the present invention is not limited thereto. The robot system 1 may dispense with the second mode and operate only in the first mode when the operation is placed on halt. Alternatively, the robot system 1 may switch the operation mode from the first mode to the second mode based on control commands received from outside, such as an input from the operator. With such a modified configuration implemented, the robot system 1 can switch the operation mode under conditions suitable for the operation of the robot 10 when the robot 10 is placed on halt.

## Claims

1. A robot system (1) comprising a robot (2) including movable members (11), and a control apparatus (20) programmed to control operation of the robot (2),
wherein the control apparatus (20) is further programmed to implement:
an emergency stop controller (230) configured to halt operation of the movable members (11) in response to receipt of an external force by the movable members (11) during operation of the movable members (11);
a direction calculator (240) configured to determine, after the emergency stop controller (230) stops the operation of the movable members (11), a moving direction to be adopted by the movable members (11), based on the external force received by the movable members (11), wherein the direction calculator (240) is configured to determine the moving direction to be a direction selected, so as to decrease the external force, from among all directions the movable members (11) can possibly move;
a speed calculator (250) configured to determine a moving speed to be adopted by the movable members (11), wherein the moving speed is determined with a variable coefficient defined to decrease over time starting from when the emergency stop controller (230) places the movable members (11) on halt and a magnitude of the external force imposed on the movable members (11) after the emergency stop controller (230) places the movable members (11) on halt;
a movement controller (260) configured to move the movable members (11) in the determined moving direction at the determined moving speed.

2. The robot system (1) according to claim 1, wherein
the speed calculator (250) is configured to operate in a first mode or in a second mode,
wherein the first mode is executable by the speed calculator (250) to determine the moving speed, using the variable coefficient and the magnitude of the external force imposed after the emergency stop controller (230) places the movable members (11) on halt, and the second mode is executable by the speed calculator (250) to determine the moving speed based solely on the magnitude of the external force imposed on the movable members (11) without regard to the variable coefficient, and
wherein the speed calculator (250) is further configured to end its operation in the first mode on conditions that a predetermined time has elapsed since the emergency stop controller (230) places the movable members (11) on halt and the external force imposed on the movable members (11) becomes less than a threshold after the emergency stop controller (230) places the movable members (11) on halt and to start its operation in the second mode.

3. The robot system (1) according to claim 2,
wherein the predetermined time is a length of time measured from when the emergency stop controller (230) places the movable members on halt through when the variable coefficient falls below a predetermined value.

4. The robot system (1) according to claim 1, wherein
the robot (2) includes a torque sensor (110) configured to detect a torque acting on the movable members (11); and
the control apparatus (20) is further programmed to implements an external force calculator (220) configured to calculate an estimated torque acting on the movable members (11), wherein the external force calculator (220) is configured to calculate the estimated torque using a point mass model representing a shape, a position, a mass, and a center of gravity of the robot and to estimate the external force imposed on the movable members (11), wherein the estimate of the external force is defined by a difference between the torque detected by the torque sensor (110) and the estimated torque calculated by the external force calculator (220).

## Patentansprüche

1. Robotersystem (1), das einen Roboter (2) umfasst, der bewegliche Elemente (11) enthält, und eine Steuereinrichtung (20), die so programmiert ist, dass sie einen Betrieb des Roboters (2) steuert,
wobei**:**
die Steuereinrichtung (20) weiter so programmiert ist, dass sie implementiert:
eine Not-Aus-Steuereinheit (230), die so ausgebildet ist, dass sie den Betrieb der beweglichen Elemente (11) als Reaktion auf einen Empfang einer äußeren Kraft durch die beweglichen Elemente (11) während des Betriebs der beweglichen Elemente (11) stoppt;
einen Richtungsrechner (240), der so ausgebildet ist, dass er, nachdem die Not-Aus-Steuereinheit (230) den Betrieb der beweglichen Elemente (11) gestoppt hat, eine von den beweglichen Elementen (11) einzunehmende Bewegungsrichtung auf der Grundlage der von den beweglichen Elementen (11) empfangenen äußeren Kraft bestimmt, wobei der Richtungsrechner (240) so ausgebildet ist, dass er die Bewegungsrichtung als eine Richtung bestimmt, die aus allen Richtungen, in die sich die beweglichen Elemente (11) möglicherweise bewegen können, so ausgewählt wird, dass die äußere Kraft verringert wird;
einen Geschwindigkeitsrechner (250), der so ausgebildet ist, dass er eine von den beweglichen Elementen (11) einzunehmende Bewegungsgeschwindigkeit bestimmt, wobei die Bewegungsgeschwindigkeit mit einem variablen Koeffizienten bestimmt wird, der so definiert ist, dass er sich mit der Zeit verringert, beginnend zu dem Zeitpunkt, zu dem die Not-Aus-Steuereinheit (230) die beweglichen Elemente (11) zum Stoppen bringt, und einer Größe der auf die beweglichen Elemente (11) einwirkenden äußeren Kraft, nachdem die Not-Aus-Steuereinheit (230) die beweglichen Elemente (11) zum Stoppen gebracht hat;
eine Bewegungssteuereinheit (260), die so ausgebildet ist, dass sie die beweglichen Elemente (11) in der bestimmten Bewegungsrichtung mit der bestimmten Bewegungsgeschwindigkeit bewegt.

2. Robotersystem (1) nach Anspruch 1, wobei:
der Geschwindigkeitsrechner (250) so ausgebildet ist, dass er in einem ersten Modus oder in einem zweiten Modus betrieben wird,
wobei der erste Modus von dem Geschwindigkeitsrechner (250) ausführbar ist, um die Bewegungsgeschwindigkeit unter Verwendung des variablen Koeffizienten und der Größe der einwirkenden äußeren Kraft zu bestimmen, nachdem die Not-Aus-Steuereinheit (230) die beweglichen Elemente (11) zum Stoppen gebracht hat, und der zweite Modus von dem Geschwindigkeitsrechner (250) ausführbar ist, um die Bewegungsgeschwindigkeit ausschließlich auf der Grundlage der Größe der auf die beweglichen Elemente (11) einwirkenden äußeren Kraft ohne Berücksichtigung des variablen Koeffizienten zu bestimmen, und
wobei der Geschwindigkeitsrechner (250) weiter so ausgebildet ist, dass er seinen Betrieb in dem ersten Modus beendet, unter der Voraussetzung, dass eine vorbestimmte Zeit verstrichen ist, seit die Not-Aus-Steuereinheit (230) die beweglichen Elemente (11) zum Stoppen gebracht hat, und die auf die beweglichen Elemente (11) einwirkende äußere Kraft unter einen Schwellenwert fällt, nachdem die Not-Aus-Steuereinheit (230) die beweglichen Elemente (11) zum Stoppen gebracht hat, und seinen Betrieb in dem zweiten Modus startet.

3. Robotersystem (1) nach Anspruch 2,
wobei die vorbestimmte Zeit eine Zeitspanne ist, die von dem Zeitpunkt, zu dem die Not-Aus-Steuereinheit (230) die beweglichen Elemente zum Stoppen bringt, bis zu dem Zeitpunkt gemessen wird, zu dem der variable Koeffizient unter einen vorbestimmten Wert fällt.

4. Robotersystem (1) nach Anspruch 1, wobei:
der Roboter (2) einen Drehmomentsensor (110) enthält, der so ausgebildet ist, dass er ein auf die beweglichen Elemente (11) wirkendes Drehmoment detektiert; und
die Steuereinrichtung (20) weiter so programmiert ist, dass sie einen Rechner (220) für äußere Kräfte implementiert, der so ausgebildet ist, dass er ein geschätztes, auf die beweglichen Elemente (11) wirkendes Drehmoment berechnet, wobei der Rechner (220) für äußere Kräfte so ausgebildet ist, dass er das geschätzte Drehmoment unter Verwendung eines Punktmassenmodells berechnet, das eine Form, eine Position, eine Masse und einen Schwerpunkt des Roboters darstellt, und die auf die beweglichen Elemente (11) einwirkende äußere Kraft schätzt, wobei die Schätzung der äußeren Kraft durch eine Differenz zwischen dem von dem Drehmomentsensor (110) detektierten Drehmoment und dem von dem Rechner (220) für äußere Kräfte berechneten geschätzten Drehmoment definiert ist.

## Revendications

1. Système de robot (1) comprenant un robot (2) incluant des éléments mobiles (11), et un appareil de commande (20) programmé pour commander le fonctionnement du robot (2),
dans lequel :
l'appareil de commande (20) est en outre programmé pour commander :
un organe de commande d'arrêt d'urgence (230) configuré pour mettre à l'arrêt le fonctionnement des éléments mobiles (11) en réponse à la réception d'une force externe par les éléments mobiles (11) pendant le fonctionnement des éléments mobiles (11);
un calculateur de direction (240) configuré pour déterminer, après que l'organe de commande d'arrêt d'urgence (230) a interrompu le fonctionnement des éléments mobiles (11), une direction de déplacement qui doit être adoptée par les éléments mobiles (11), sur la base de la force externe reçue par les éléments mobiles (11), le calculateur de direction (240) étant configuré pour déterminer, parmi toutes les directions dans lesquelles les éléments mobiles (11) sont susceptibles de se déplacer, la direction de déplacement qui doit être une direction choisie de manière à réduire la force externe ;
un calculateur de vitesse (250) configuré pour déterminer une vitesse de déplacement qui doit être adoptée par les éléments mobiles (11), la vitesse de déplacement étant déterminée à l'aide d'un coefficient variable défini pour diminuer au cours du temps à partir du moment où l'organe de commande d'arrêt d'urgence (230) met les éléments mobiles (11) à l'arrêt et d'une intensité de la force externe exercée sur les éléments mobiles (11) après que l'organe de commande d'arrêt d'urgence (230) a mis les éléments mobiles (11) à l'arrêt ;
un organe de commande de mouvement (260) configuré pour déplacer les éléments mobiles (11) dans la direction de déplacement déterminée à la vitesse de déplacement déterminée.

2. Système de robot (1) selon la revendication 1, dans lequel :
le calculateur de vitesse (250) est configuré pour fonctionner dans un premier mode ou dans un second mode,
le premier mode pouvant être exécuté par le calculateur de vitesse (250) pour déterminer la vitesse de déplacement, en utilisant le coefficient variable et l'intensité de la force externe exercée après que l'organe de commande d'arrêt d'urgence (230) a mis les éléments mobiles (11) à l'arrêt, et le second mode pouvant être exécuté par le calculateur de vitesse (250) pour déterminer la vitesse de déplacement uniquement sur la base de l'intensité de la force externe exercée sur les éléments mobiles (11), sans tenir compte du coefficient variable, et
dans lequel le calculateur de vitesse (250) est en outre configuré pour mettre fin à son fonctionnement dans le premier mode à condition qu'un temps préétabli se soit écoulé depuis que l'organe de commande d'arrêt d'urgence (230) a mis les éléments mobiles (11) à l'arrêt et que la force externe exercée sur les éléments mobiles (11) soit devenue inférieure à un seuil après que l'organe de commande d'arrêt d'urgence (230) a mis les éléments mobiles (11) à l'arrêt et pour démarrer son fonctionnement dans le second mode.

3. Système de robot (1) selon la revendication 2,
dans lequel le temps préétabli est un espace de temps mesuré depuis le moment où l'organe de commande d'arrêt d'urgence (230) met les éléments mobiles à l'arrêt jusqu'au moment où le coefficient variable chute au-dessous d'une valeur préétablie.

4. Système de robot (1) selon la revendication 1, dans lequel :
le robot (2) inclut un capteur de couple (110) configuré pour détecter un couple agissant sur les éléments mobiles (11) ; et
l'appareil de commande (20) est en outre programmé pour commander un calculateur de force externe (220) configuré pour calculer un couple estimé agissant sur les éléments mobiles (11), le calculateur de force externe (220) étant configuré pour calculer le couple estimé en utilisant un modèle de masse ponctuelle représentant une forme, une position, une masse et un centre de gravité du robot et pour estimer la force externe exercée sur les éléments mobiles (11), l'estimation de la force externe étant définie par une différence entre le couple détecté par le capteur de couple (110) et le couple estimé, calculé par le calculateur de force externe (220).
